# EUROPÄISCHE PATENTANMELDUNG

(11) **EP 3 486 849 A1**
(43) Veröffentlichungstag der Anmeldung: **22.05.2019**
(21) Anmeldenummer: 18203065.0
(22) Anmeldetag: 29.10.2018
(51) Int. Cl.: G06Q 10/08

(54) **VERFAHREN ZUM NACHVERFOLGEN EINES LADUNGSTRÄGERS**

(30) Priorität: 17.11.2017 DE 102017127155
(71) Anmelder: CHEP Deutschland GmbH, 50679 Köln (DE)
(72) Erfinder: PANNICKE, Marco, 50679 Köln (DE)
(74) Vertreter: Prinz & Partner mbB

(57) **Zusammenfassung**

Die Erfindung betrifft ein Verfahren zum Nachverfolgen eines Ladungsträgers mittels der folgenden Schritte:
- der Ladungsträger wird mit einem Beacon, dem ein optisch lesbarer Beacon-Code zugeordnet ist, und einem optisch lesbaren Ladungsträger-Code versehen,
- die beiden Codes werden mittels einer Kamera eines Smartphones gescannt,
- die beiden Codes werden in einer Datenbank einem bestimmten Ladungsträger zugeordnet.
- die Informationen werden einen Nutzer verfügbar gemacht.

## Beschreibung

Die Erfindung betrifft ein Verfahren zum Nachverfolgen eines Ladungsträgers.

Bei dem Ladungsträger handelt es sich um einen Gegenstand, mit dem Waren transportiert werden. Es kann auch vorgesehen sein, dass der Ladungsträger dazu verwendet wird, die auf ihm transportieren Waren potentiellen Kunden zum Verkauf zu präsentieren, beispielsweise in einem Geschäft.

Bei den Ladungsträgern kann es sich insbesondere um eine Palette handeln, beispielsweise eine sogenannte Viertelpalette, deren Fläche ein Viertel einer Europalette beträgt.

Für verschiedene Personengruppen ist es wünschenswert nachzuvollziehen, wo sich ein bestimmter Ladungsträger gerade befindet. Beispielsweise ist es während des Transports von Waren sowohl für den Eigentümer der Waren als auch für den Spediteur von Interesse, wo sich bestimmte Ladungsträger und die damit transportierten Waren gerade befinden. Für den Hersteller oder den Eigentümer von Waren kann es von Interesse sein, wo genau sich die Waren innerhalb eines Geschäfts befinden, um beispielsweise zu überwachen, ob die Waren auch an zugesagten Orten innerhalb des Geschäfts präsentiert werden.

Die Aufgabe der Erfindung besteht darin, das Nachverfolgen eines Ladungsträgers und der sich auf ihm befindenden Waren mit möglichst geringem Aufwand zu ermöglichen.

Erfindungsgemäß ist zur Lösung dieser Aufgabe ein Verfahren zum Nachverfolgen eines Ladungsträgers vorgesehen, wobei die folgenden Schritte vorgenommen werden: Der Ladungsträger wird mit einem Beacon, dem ein optisch lesbarer Beacon-Code zugeordnet ist, und einem optisch lesbaren Ladungsträger-Code versehen. Die beiden Codes werden mittels einer Kamera eines Smartphones gescannt, und die beiden Codes werden in einer Datenbank einem bestimmten Ladungsträger zugeordnet. Schließlich werden diese Informationen einem Nutzer verfügbar gemacht. Der besondere Vorteil des erfindungsgemäßen Verfahrens besteht darin, dass die beiden Codes mittels eines Smartphones "verheiratet" werden, also mit einem technischen Gerät, das mittlerweile allgemein verfügbar ist. Es ist daher nicht nötig, dass diejenigen Personen, die das Beacon mit dem Ladungsträger verknüpfen sollen, mit einem hierfür eigens eingerichteten Scanner oder einem ähnlichen Gerät ausgestattet werden. Somit werden erhebliche Investitionskosten eingespart.

Beim Beacon-Code handelt es sich vorzugsweise um einen QR-Code, da dieser aufgrund seiner quadratischen Form besonders gut auf einem Beacon angebracht werden kann, das oft eine Kreisform hat.

Beim Ladungsträger-Code kann es sich um einen Barcode handeln, der auf eine Randfläche des Ladungsträgers aufgeklebt werden kann.

Gemäß einer bevorzugten Ausführungsform der Erfindung ist vorgesehen, dass mittels des Smartphones zusätzlich ein Waren-Code gescannt wird, der dem bestimmten Ladungsträger zugeordnet wird. Somit kann ein Nutzer den Ladungsträger mit der darauf gepackten Ware verknüpfen, und über das Beacon können Informationen über den Standort und gegebenenfalls weitere Parameter abgerufen werden, beispielsweise die Menge der sich auf dem Ladungsträger befindenden Waren, wenn der Ladungsträger mit einem hierfür eingerichteten Sensor versehen ist.

Das Beacon ist vorzugsweise mechanisch lösbar am Ladungsträger angebracht, insbesondere dort angeclipst.

Vorzugsweise wird das Beacon, wenn es am Ladungsträger angebracht ist, aktiviert, beispielsweise indem ein Nutzer einen entsprechenden Schalter oder eine Schaltfläche am Beacon drückt.

Beim Ladungsträger-Code kann es sich um einen "Global Returnable Asset Identifier" handeln. Der Beacon-Code ist vorzugsweise ein "Universally Unique Identifier". Beim Waren-Code kann es sich um die Nummer der Versandeinheit ("NVE") handeln.

Bei dem Nutzer, dem die Informationen über den Ladungsträger und die Waren zugänglich gemacht werden, muss es sich nicht notwendigerweise um eine natürliche Person handeln. Es kann sich auch um Software handeln, die die Informationen nutzt, beispielsweise in einer Blockchain-Technologie.

Das erfindungsgemäße Verfahren kann mit geringem Aufwand durchgeführt werden, indem auf dem Smartphone entweder eine App geöffnet oder eine Website aufgerufen wird, die das Verknüpfen der verschiedenen Codes ermöglicht.

Der Nutzer scannt dann die entsprechenden Codes auf dem Beacon, dem Ladungsträger und auf der Ware oder auf Warenbegleitpapieren. Außerdem aktiviert er das Beacon. Auf dem Smartphone können unmittelbar Rückmeldungen gegeben werden, ob der Vorgang erfolgreich war.

Dann ist für alle Nutzer, denen Zugang zu diesen Informationen gewährt wird, nachvollziehbar, wo sich der Ladungsträger mit den Waren befindet. Dies kann der letzte Ort sein, an dem ein Empfänger mit dem Beacon Signale ausgetauscht hat, oder auch der aktuelle Ort, wenn sich das Beacon im Empfangsbereich eines Empfängers befindet, der der Datenbank Signale in Echtzeit (oder jedenfalls mit geringer zeitlicher Verzögerung) übermittelt.

## Patentansprüche

1. Verfahren zum Nachverfolgen eines Ladungsträgers mittels der folgenden Schritte:
- der Ladungsträger wird mit einem Beacon, dem ein optisch lesbarer Beacon-Code zugeordnet ist, und einem optisch lesbaren Ladungsträger-Code versehen,
- die beiden Codes werden mittels einer Kamera eines Smartphones gescannt,
- die beiden Codes werden in einer Datenbank einem bestimmten Ladungsträger zugeordnet.
- die Informationen werden einen Nutzer verfügbar gemacht.

2. Verfahren nach Anspruch 1, **dadurch gekennzeichnet, dass** der Beacon-Code ein QR-Code ist.

3. Verfahren nach Anspruch 1 oder Anspruch 2, **dadurch gekennzeichnet, dass** der Ladungsträger-Code ein Barcode ist.

4. Verfahren nach einem der vorhergehenden Ansprüche, **dadurch gekennzeichnet, dass** mittels des Smartphones zusätzlich ein Waren-Code gescannt wird, der dem bestimmten Ladungsträger zugeordnet wird.

5. Verfahren nach einem der vorhergehenden Ansprüche, **dadurch gekennzeichnet, dass** der Beacon an den Ladungsträger angeclipst wird.

6. Verfahren nach einem der vorhergehenden Ansprüche, **dadurch gekennzeichnet, dass** der Beacon aktiviert wird.

7. Verfahren nach einem der vorhergehenden Ansprüche, **dadurch gekennzeichnet, dass** der Ladungsträger-Code auf den Ladungsträger aufgeklebt wird.

8. Verfahren nach einem der vorhergehenden Ansprüche, **dadurch gekennzeichnet, dass** der Ladungsträger-Code ein GRAI ("Global Returnable Asset Identifier") ist.

9. Verfahren nach einem der vorhergehenden Ansprüche, **dadurch gekennzeichnet, dass** der Beacon-Code ein UUID ("Universally Unique Identifier") ist.

10. Verfahren nach einem der vorhergehenden Ansprüche, **dadurch gekennzeichnet, dass** den sich auf dem Ladungsträger befindenden Waren eine NVE zugeordnet ist.
